(19) Europäisches Patentamt
European Patent Office
Office européen des brevets

(11) **EP 0 960 363 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.⁷: **G05B 19/19**

(21) Anmeldenummer: **98910583.8**

(86) Internationale Anmeldenummer:
**PCT/DE98/00308**

(22) Anmeldetag: **04.02.1998**

(87) Internationale Veröffentlichungsnummer:
**WO 98/36334 (20.08.1998 Gazette 1998/33)**

(54) **STEUERVERFAHREN FÜR EINEN HYDRAULIKANTRIEB EINES TECHNISCHEN PROZESSES**

CONTROL METHOD FOR A HYDRAULIC MECHANISM OF A TECHNICAL PROCESS

PROCEDE DE COMMANDE D'UNE TRANSMISSION HYDRAULIQUE D'UN PROCESSUS TECHNIQUE

(84) Benannte Vertragsstaaten:
**AT DE FI IT**

(30) Priorität: **17.02.1997 DE 19706105**

(43) Veröffentlichungstag der Anmeldung:
**01.12.1999 Patentblatt 1999/48**

(73) Patentinhaber: **SIEMENS AKTIENGESELLSCHAFT**
**80333 München (DE)**

(72) Erfinder: **WOLF, Thomas**
**D-91180 Heideck (DE)**

(56) Entgegenhaltungen:
- **KELLER H: "ADAPTIVE REGELUNG EINES PNEUMATISCHEN LINEARANTRIEBS" OLHYDRAULIK UND PNEUMATIK, Bd. 38, Nr. 4, 1.April 1994, Seiten 220-222, 224/225, XP000454268**

**Beschreibung**

Bei Hydraulikantrieben, welche zum Betrieb eines technischen Prozesses dienen, kann eine Anwendung insbesondere darin bestehen, daß der Hydraulikantrieb ein bestimmtes Geschwindigkeitsprofil aufweisen soll. Unter Vorgabe einer Soll-Antriebsgeschwindigkeit wirkt der Hydraulikantrieb auf den technischen Prozeß ein.

Es besteht einerseits insbesondere die Möglichkeit, den Hydraulikantrieb mittels einer Regelungsschaltung bezüglich dessen Arbeitsgeschwindigkeit zu regeln. Der Nachteil von derartigen Regelungsschaltungen besteht darin, daß für die Regelung eine präzise, schnelle und dadurch technisch aufwendige Sensorik und Regelungstechnik notwendig ist. Die Sensorik dient zur Erfassung bestimmter, als Eingabegrößen der Regelungsschaltung benötigter Meßwerte des Hydraulikantriebs, wie beispielsweise bestimmter Drücke, Ventilwege und Antriebsgeschwindigkeiten.

Aus Köckemann, A.; Konertz, J.; Lausch, H.: "Regelung elektrohydraulischer Antriebe unter Berücksichtigung industrieller Randbedingungen"; at - Automatisierungstechnik, 1991, Nr. 6, S. 187 bis 196 sind drei unterschiedliche Regelungskonzepte, Zustandsregelung, adaptive Regelung und strukturvariable Modellfolgeregelung bekannt. Des weiteren ist aus Pritschow, G.: Dalacker, M.; Treffler, V.: "Hochdynamische digitale Regelung von Kunststoffspritzgießmaschinen"; O + P "Ölhydraulik und Pneumatik", 1993, Nr. 6, S. 528 bis 531 ist eine digitale Regelung von Kunststoffspritzgießmaschinen bekannt. Bei diesen Regelungsschaltungen ist für die Regelung ebenfalls eine entsprechende Sensorik und Regelungstechnik erforderlich.

Aus dem Dokument DE 43 15 626 C1 ist eine Steuerung für einen hydraulischen Antrieb bekannt, bei der aus einem vorgegebenen Sollwert ein Sollwert für die Bewegung des Antriebs berechnet wird. Die Berechnung beruht dabei jeweils zumindest auf einer gemessenen Zustandsgröße des Antriebs zum Zeitpunkt der Berechnung.

Der Erfindung liegt die Aufgabe zugrunde, ein Steuerverfahren für einen Hydraulikantrieb anzugeben, welches die Berücksichtigung von Nichtlinearitäten ermöglicht.

Die Aufgabe wird gelöst mit dem im Anspruch 1 angegebenen Steuerverfahren, sowie der in Anspruch 11 angegebenen Kunststoffspritzgießmaschine mit einer Steuerschaltung zur Durchführung des Steuerverfahrens und der in Anspruch 12 angegebenen Verwendung des Steuerverfahrens zur Steuerung einer Kunststoffspritzgießmaschine.

Das erfindungsgemäße Steuerverfahren hat den Vorteil, daß zur Erzeugung der den Hydraulikantrieb ansteuernden Stellgröße nichtlineare Abhängigkeiten des auf den technischen Prozeß wirkenden Hydraulikantriebs berücksichtigbar sind. Dabei kann vorteilhaft auf eine technisch aufwendige Sensorik zur Meßwerterfassung verzichtet werden.

Besonders vorteilhaft ist es, daß bei dem erfindungsgemäßen Steuerverfahren sowohl Eigenschaften des Hydraulikantriebs, als auch Eigenschaften des technischen Prozesses berücksichtigt werden, insbesondere der innere Widerstand, welcher der technische Prozeß dem Hydraulikantrieb entgegensetzt.

In einer vorteilhaften Ausführungsform des erfindungsgemäßen Steuerverfahrens wird der den inneren Widerstand nachbildende Parameter zyklisch aktualisiert. Dadurch kann vorteilhaft eine adaptive, insbesondere automatisch erfolgende Umstellung des Steuerverfahrens auf wechselnde, technische Prozesse erfolgen, welche durch den Hydraulikantrieb betrieben werden.

Vorteilhaft kann durch Verwendung des erfindungsgemäßen Steuerverfahrens beispielsweise bei Kunststoffspritzgießmaschinen somit eine umständliche Aufheiz- und Abkühlphase vor Verwendung eines neuen Kunststoffspritzgießwerkzeuges entfallen, da durch die zyklisch erfolgende Aktualisierung Änderungen des technischen Prozesses automatisch berücksichtigbar sind.

Ein weiterer Vorteil ist es, daß das erfindungsgemäße Steuerverfahren mittels einer Vorsteuerschaltung in einem Regelschaltkreis durchführbar ist. Eine entsprechende Vorsteuerschaltung ist beispielsweise als Unterstützung eines Regelschaltkreises einsetzbar. Während das erfindungsgemäße Steuerverfahren die gröbere Voreinstellung des Hydraulikantriebs übernimmt, dient der Regelschaltkreis lediglich noch zur weiteren, zusätzlichen Feinabstimmung. Dadurch ist die Genauigkeit und Schnelligkeit des Hydraulikantriebes verbesserbar.

Weitere vorteilhafte Ausführungsformen der Erfindung sind in den entsprechenden Unteransprüchen angegeben.

Die Erfindung wird desweiteren anhand des in den nachfolgenden Figuren dargestellten Ausführungsbeispiels weiter erläutert. Dabei zeigt:

FIG 1    beispielhaft einen schematischen Aufbau eines Hydraulikantriebs eines technischen Prozesses, wobei von dem erfindungsgemäßen Steuerverfahren eine Stellgröße zur Ansteuerung des Hydraulikantriebs erzeugt wird,

FIG 2    beispielhaft unterschiedliche Verläufe des Verhältnisses von Istwert des Drucks zum Istwert der Antriebsgeschwindigkeit für verschiedene innere Widerstände des technischen Prozesses, über einem Wertebereich der von dem erfindungsgemäßen Steuerverfahren erzeugten Stellgröße,

FIG 3 beispielhaft einen vorgegebenen Verlauf der Sollwerte für die Antriebsgeschwindigkeit des Hydraulikantriebs über dem Antriebsweg und die mittels des erfindungsgemäßen Steuerverfahrens tatsächlich erreichten Istwerte,

FIG 4 beispielhaft die Verläufe von Istwert und Sollwert der Antriebsgeschwindigkeit bei zyklischer Aktualisierung des den inneren Widerstand nachbildenden Parameters, welcher zunächst zu Beginn des Antriebswegs zu klein voreingestellt ist, und

FIG 5 beispielhaft die Verläufe von Istwert und Sollwert der Antriebsgeschwindigkeit bei zyklischer Aktualisierung des den inneren Widerstand nachbildenden Parameters, welcher zunächst zu Beginn des Antriebswegs zu groß voreingestellt ist.

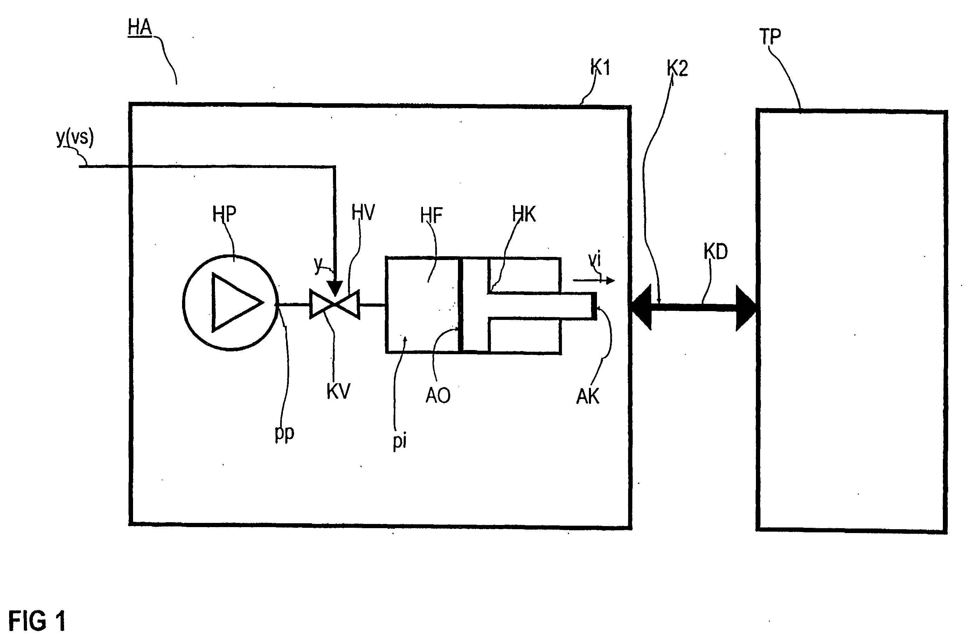

In der Figur 1 ist beispielhaft ein schematischer Aufbau eines Hydraulikantriebs HA eines technischen Prozesses TP dargestellt. Von dem erfindungsgemäßen Steuerverfahren wird eine Stellgröße y zur Ansteuerung des Hydraulikantriebs HA erzeugt. Bei der Erzeugung der Stellgröße y werden erfindungsgemäß zumindest ein Sollwert vs für die Antriebsgeschwindigkeit des Hydraulikantriebs HA; ein erster Parameter KI, welcher das Übertragungsverhalten des Hydraulikantriebs HA nachbildet und ein zweiter Parameter K2 berücksichtigt, welcher den inneren Widerstand des technischen Prozesses TP nachbildet.

Beispielsweise dient die Stellgröße y zur Ansteuerung eines Hydraulikventils HV im Hydraulikantrieb HA. Dieses steuert den Zufluß einer Hydraulikflüssigkeit HF von einer Hydraulikpumpe HP in wenigstens einen Hydraulikkolben HK im Hydraulikantrieb HA. Die Stellgröße y zum Öffnen und Schließen des Hydraulikventils HV wird insbesondere als "Ventilweg" bezeichnet. Die Steuerung des Hydraulikventils HV erfolgt dabei gemäß der Erfindung derartig, daß insbesondere ein vorgegebener Sollwert vs der Antriebsgeschwindigkeit des Hydraulikkolbens HK bewirkt wird.

Desweiteren wird durch das erfindungsgemäße Steuerverfahren bei der Erzeugung der den Hydraulikantrieb HA ansteuernden Stellgröße y eine erste Konstante pp berücksichtigt, welche den Druck nachbildet, welcher von einer Hydraulikpumpe HP im Hydraulikantrieb HA erzeugt wird. Dies ist in der Regel der vor dem Hydraulikventil HV vorliegende Druck der Hydraulikflüssigkeit HF.

Wie entsprechend weiter unten noch näher erläutert wird, ergibt sich gemäß der Erfindung für die Stellgröße y:

$$y = \frac{K1 \cdot vs}{\sqrt{pp - K2 \cdot vs}} \qquad \text{(Gl.1)}$$

Der das Übertragungsverhalten des Hydraulikantriebs HA nachbildende erste Parameter K1 ist insbesondere eine sogenannte "maschinenabhängige" Größe, d.h.. deren Wert ist jeweils von dem entsprechenden Hydraulikantrieb HA abhängig, welcher zur Durchführung des Verfahrens verwendet wird. In einer Ausführungsform der Erfindung weist der erste Parameter K1 insbesondere eine zweite Konstante AO auf, welche diejenige Querschnittsfläche der Hydraulikkolben HK des Hydraulikantriebs HA nachbildet, welche von der Hydraulikflüssigkeit HF beaufschlagt wird. Desweiteren vorteilhaft kann der erste Parameter K1 eine dritte Konstante KV aufweisen, welche das Übertragungsverhalten eines Hydraulikventils HV im Hydraulikantrieb HA nachbildet. Dies ist beispielsweise die sogenannte "Ventilkonstante" des Hydraulikventils HV. Bevorzugt ist der erste Parameter K1 annähernd proportional zum Quotienten aus der zweiten Konstante AO und der dritten Konstante KV:

$$K1 = \frac{AO}{KV} \qquad \text{(Gl.2)}$$

Bei der Verwendung des erfindungsgemäßen Steuerverfahrens beispielsweise zur Steuerung von Hydraulikantrieben HA von Kunststoffspritzgießmaschinen bildet die vierte Konstante KD insbesondere den Spritzwiderstand nach, welcher ein Kunststoffspritzgießwerkzeug gegenüber einzupressendem Kunststoff aufweist. Insbesondere Werkzeugwechsel oder Verwendung einer andersartigen Kunststoffzusammensetzung kann eine Veränderung des Spritzwiderstands und damit der vierten Konstante KD bewirken.

Der den inneren Widerstand nachbildende, zweite Parameter K2 ist eine prozeßabhängige Größe, welche von Eigenschaften des technischen Prozesses TP abhängig ist. In einer Ausführungsform der Erfindung wird der zweite Parameter K2 insbesondere aus dem Produkt zwischen einer vierten Konstante KD und einem Proportionalitätsfaktor P gebildet. Die vierte Konstante KD bildet dabei den inneren Widerstand nach, welcher dem Hydraulikantrieb HA vom technischen Prozeß TP entgegensetzt wird.

$$K2 = P \cdot KD \tag{Gl.3}$$

Insbesondere weist der Proportionalitätsfaktor P eine zweite Konstante AO auf, welche diejenige Querschnittsfläche der Hydraulikkolben HK des Hydraulikantriebs HA nachbildet, welche von der Hydraulikflüssigkeit HF beaufschlagt wird. Desweiteren weist der Proportionalitätsfaktor P insbesondere eine fünfte Konstante AK aufweisen. Diese bildet diejenige Querschnittsfläche von Hydraulikkolben HK des Hydraulikantriebs HA nach, welche auf den zum technischen Prozeß TP führenden Teil des Hydraulikantriebs HA einwirkt. Bevorzugt ist der Proportionalitätsfaktor P dabei annähernd proportional zum Quotienten aus dem Quadrat der fünften Konstante AK und der zweiten Konstante AO:

$$K2 = \frac{AK^2}{AO} \cdot KD \tag{Gl.4}$$

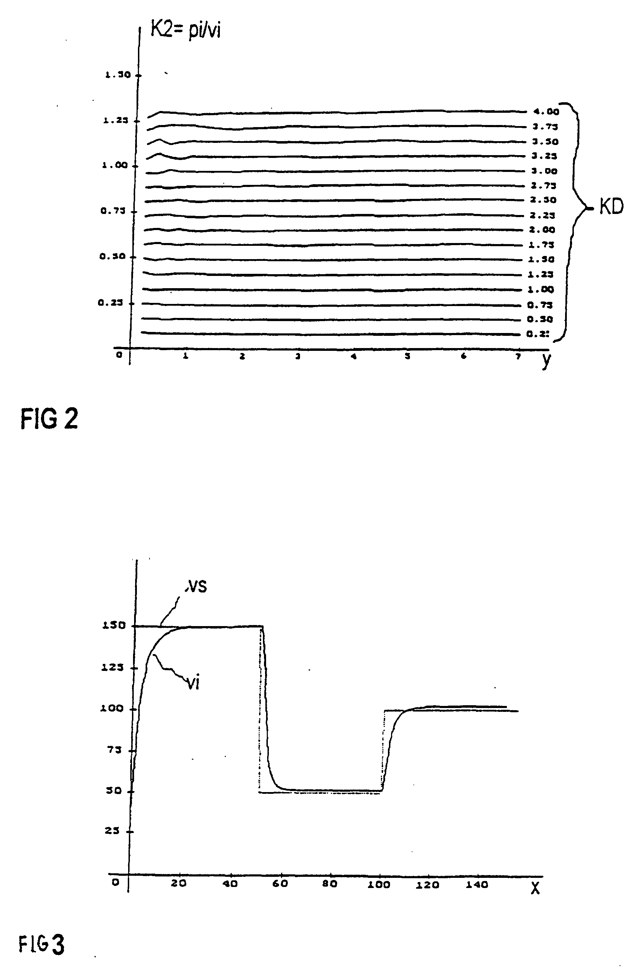

In Figur 2 sind beispielhaft unterschiedliche Verläufe des Quotienten aus dem auf die Hydraulikkolben HK des Hydraulikantriebs HA wirkenden Istwert des Drucks pi der Hydraulikflüssigkeit HF und dem Istwert der Antriebsgeschwindigkeit vi des Hydraulikkolbens HK über einem Wertebereich der Stellgröße y dargestellt. Die verschiedenen Verläufe ergeben sich aus einer unterschiedlichen Belegung der den inneren Widerstand nachbildenden vierten Konstante KD. Dabei bleibt der Quotient aus dem Istwert des Drucks pi und dem Istwert der Antriebsgeschwindigkeit vi unabhängig vom Wert der Stellgröße y nahezu konstant für einen bestimmten Wert der vierten Konstante KD. Wie weiter unten näher erläutert ist, ist als weitere Ausführungsform des erfindungsgemäßen Steuerverfahrens der zweite Parameter K2 als Quotient aus dem auf die Hydraulikkolben HK wirkenden Istwert des Drucks pi der Hydraulikflüssigkeit HF und dem Istwert der Antriebsgeschwindigkeit vi des Hydraulikkolbens HK in einem eingeschwungenen Zustand des Hydraulikantriebs HA definierbar:

$$K2 = \frac{pi}{vi} \tag{Gl.5}$$

Da der zweite Parameter K2 somit unabhängig vom Wert der Stellgröße y annähernd konstant bleibt, braucht dieser für einen bestimmten technischen Prozeß TP nur einmal festgelegt werden. Vorteilhaft kann dies beispielsweise durch Meßwerterfassung des Istwerts des Drucks pi und des dazugehörigen Istwerts der Antriebsgeschwindigkeit vi erfolgen.

Zur Herleitung der dem erfindungsgemäßen Steuerverfahren zugrundeliegenden bereits oben aufgeführten Gleichungen können mit Bezug auf Figur 1 insbesondere die Eigenschaften des Hydraulikventils HV des Hydraulikantriebs HA mittels einer Bernoulli-Gleichung beschrieben werden:

$$Q_{öl} = y \cdot KV \cdot \sqrt{pp - p_{öl}} \tag{Gl.6}$$

In Gleichung 6 werden als Prozeßparameter bevorzugt der Pumpendruck der Hydraulikpumpe HP als erste Konstante pp, der Arbeitsdruck $p_{öl}$ der Hydraulikflüssigkeit HF im Hydraulikkolben HK, der Volumenstrom $Q_{öl}$ der Hydraulikflüssigkeit HF, die Stellgröße y als Ventilweg des Hydraulikventils HV und die Ventilkonstante KV zur Beschreibung der maschinenbaulichen Eigenschaften des Hydraulikventils HV verwendet. Der Pumpendruck pp wird aus Gründen der Vereinfachung als konstant angesetzt, was sowohl am realen Hydraulikantrieb als auch in einem Simulationsmodell nicht tatsächlich der Fall ist. Es existiert eine Abhängigkeit des Pumpendrucks pp vom Volumenstrom $Q_{öl}$, die aber in Gleichung 6 vernachlässigt wurde.

Für den Volumenstrom $Q_{öl}$ ist insbesondere folgende Gleichung angebbar, wobei eine Kompressibilität der Hydraulikflüssigkeit HF vernachlässigt wurde, d.h. daß die gesamte, von der Hydraulikpumpe HP geförderte Hydraulikflüssigkeit HF, zur Verschiebung des Hydraulikkolbens HK beiträgt. Damit gilt für das Volumen $V_{öl}$ der im Hydraulikkolben HK bewegten Hydraulikflüssigkeit HF unter Zuhilfenahme der zweiten Konstante AO, des vom Hydraulikkolben HK zurückgelegten Arbeitsweges x und der dazugehörigen Antriebsgeschwindigkeit v die Beziehung:

$$V_{öl} = AO \cdot x \tag{Gl.7}$$

$$Q_{\text{öl}} = \frac{dV_{\text{öl}}}{dt} = AO \cdot \frac{dx}{dt} = AO \cdot v \qquad \text{(Gl.8)}$$

Durch Einsetzen von Gleichung 8 in Gleichung 6 und durch Umformung nach dem Ventilweg y erhält man insbesondere

$$y = \frac{AO \cdot v}{KV \cdot \sqrt{pp - p_{\text{öl}}}} \qquad \text{(Gl.9)}$$

In dieser Gleichung ist der Ventilweg y von den beiden Prozeßgrößen v und pp abhängig. Da eine direkte Proportionalität zwischen dem Arbeitsdruck $p_{\text{öl}}$ der Hydraulikflüssigkeit HF und der Antriebsgeschwindigkeit v des Hydraulikkolbens HK besteht, ist insbesondere eine der beiden Größen durch die jeweilig andere ersetzbar. Als Proportionalitätsfaktor ist die vierte Konstante KD einsetzbar, welche den dem Hydraulikantrieb HA entgegensetzten inneren Widerstand des technischen Prozesses TP nachbildet.

Im eingeschwungenen Zustand des Hydraulikantriebs HA ist insbesondere die Antriebsgeschwindigkeit v des Hydraulikkolbens HK konstant. Dies bedeutet, daß die Beschleunigung des Hydraulikkolbens HK bzw. die auf diesen wirkende resultierende Kraft zwischen der von der Hydraulikflüssigkeit HF auf den Hydraulikkolben HK übertragenden Kraft $F_{\text{öl}}$ und der vom Hydraulikkolben HK auf die Hydraulikflüssigkeit HF übertragenden Kraft $F_K$ gleich Null ist. Dadurch ergibt sich:

$$0 = F_{\text{öl}} - F_K \qquad \text{(Gl.10)}$$

$$0 = P_{\text{öl}} \cdot AO - v \cdot KD \cdot AK^2 \qquad \text{(Gl.11)}$$

$$v = \frac{P_{\text{öl}} \cdot AO}{KD \cdot AK^2} \qquad \text{(Gl.12)}$$

Bei konstantem Istwert der Antriebsgeschwindigkeit vi=v und dem dazugehörigen Istwert des Druckes Pi=Pöl ergibt sich die folgende Gleichung für den zweiten Parameter K2:

$$K2 = \frac{AK^2 \cdot KD}{AO} = \frac{P_{\text{öl}}}{v} = \frac{p_i}{v_i} \qquad \text{(Gl.13)}$$

In der Figur 3 ist beispielhaft der Verlauf der Sollwerte für die Antriebsgeschwindigkeit vs des Hydraulikantriebs HA dargestellt. Auf der Abszisse ist dabei der Arbeitsweg x des Hydraulikantriebs HA dargestellt. Der Arbeitsweg x bezieht sich dabei auf den insbesondere durch den Hydraulikkolben HK beim Betrieb des technischen Prozesses zurückgelegten Weg. Desweiteren ist der Verlauf der mittels des erfindungsgemäßen Steuerverfahrens tatsächlich erreichten Istwerte der Antriebsgeschwindigkeit vi bei konstantem ersten Parameter K1 und konstantem zweiten Parameter K2 dargestellt. Vorteilhaft nähert sich der Verlauf der Istwerte vi auch nach sprunghaften Änderungen schnell dem Verlauf der Sollwerte vs.

In einer weiteren Ausführungsform des erfindungsgemäßen Steuerverfahrens dient dieses vorteilhaft auch zur Verwendung in einer sogenannten Vorsteuerung eines Hydraulikantriebs HA. Beispielsweise kann eine entsprechende Steuerschaltung zur Durchführung des erfindungsgemäßen Steuerverfahrens als zusätzlicher Stützschaltung eines Regelschaltkreises diesem parallel geschaltet werden.

In einer weiteren vorteilhaften Ausführungsform des erfindungsgemäßen Steuerverfahrens wird der zweite Parameter K2 bezüglich Veränderungen des technischen Prozesses TP zyklisch aktualisiert. Dabei erfolgt die Erzeugung der Stellgröße y mittels des erfindungsgemäßen Steuerverfahrens bevorzugt als Funktion des Sollwertes vs für die Antriebsgeschwindigkeit des Hydraulikantriebs HA. Derartige Veränderungen, welche eine Aktualsisierung des zweiten Parameters K2 erfordern, sind insbesondere Änderungen des dem Hydraulikantrieb HA vom technischen Prozeß TP entgegensetzten inneren Widerstand. Beispielsweise repräsentieren bei einer Kunststoffspritzgießmaschine die Stellgröße y insbesondere den sogenannten "Ventilweg" und der innere Widerstand insbesondere den sogenannten "Spritzwiderstand". Eine Veränderung des Spritzwiderstands kann beispielsweise durch Werkzeugwechsel oder durch Verwendung eines anderen Kunststoffes erfolgen.

Vorteilhaft ist somit mittels des erfindungsgemäßen Steuerverfahrens eine adaptive Vorsteuerung eines Hydraulikantriebs HA bewirkbar. Die Berechnung des zweiten Parameters nach Gleichung 5 wird gemäß der Erfindung zyklisch aktualisiert, bevorzugt während des Betriebs des Hydraulikantriebs HA:

$$K2(t) \quad = K2(t-1) \quad + \quad h \cdot \left( \frac{pi}{vi} \quad - \quad K2(t-1) \right) \quad (Gl.14)$$

Dabei bildet K2(t) den aktualisierten zweiten Parameter K2, während K2(t-1) den dem erfindungsgemäßen Steuerverfahren vor der Aktualisierung zugrunde liegenden zweiten Parameter K2 bildet. Eine Adaptionskonstante h legt fest, wie schnell sich der aktualisierte zweite Parameter K2(t) den aktuell gemessenen Werten des Istwertes des Drucks pi der Hydraulikflüssigkeit HF und des Istwertes der Antriebsgeschwindigkeit vi des Hydraulikkolbens HK annähert. Gleichung 14 gilt insbesondere für einen zeitlich konstanten Istwert der Antriebsgeschwindigkeit vi. Eine Adaption des zweiten Parameters K2 ist somit insbesondere dann von Vorteil, wenn die zeitliche Änderung des Istwerts der Antriebsgeschwindigkeit vi ausreichend klein ist. Vorzugsweise liegt ein umgekehrt proportionales Verhalten der Adaptionskonstante h bezüglich der zeitlichen Änderung des Istwerts der Antriebsgeschwindigkeit vi vor. Erfolgt keine zeitliche Änderung des Istwerts der Antriebsgeschwindigkeit vi, d.h. vi=0, so liegt insbesondere ein Maximalwert hmax der Adaptionskonstante h vor, d.h. h=hmax. Übersteigt demgegenüber die zeitliche Änderung des Istwerts der Antriebsgeschwindigkeit vi einen Maximalwert aimax = $\partial vi / \partial t$, so liegt insbesondere ein Minimalwert hmin der Adaptionskonstante h vor, d.h. beispielsweise h=hmin=0. Das erfindungsgemäße Steuerverfahren, insbesondere das adaptive Verhalten der Adaptionskonstanten h bezüglich der zeitlichen Änderung des Istwerts der Antriebsgeschwindigkeit vi, ist vorteilhaft mittels einer Steuerungsschaltung mit Fuzzy-Logik, beispielsweise einem Ein- oder Mehrgrößenfuzzysystem durchführbar.

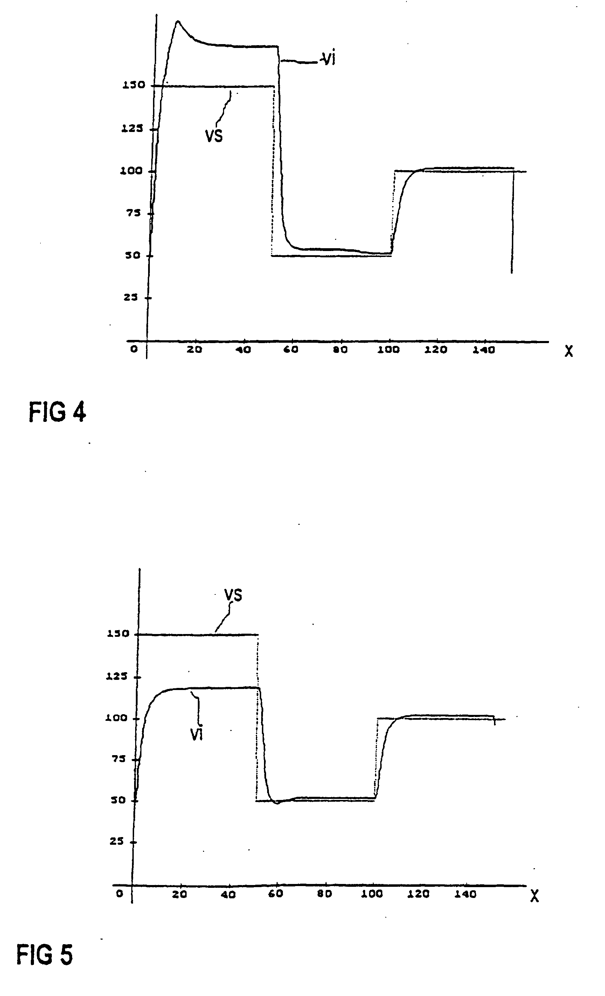

In den Figuren 4 und 5 sind beispielhaft die Verläufe von Istwert vi und Sollwert vs der Antriebsgeschwindigkeit dargestellt, wobei eine zyklische Aktualisierung des den inneren Widerstand nachbildenden zweiten Parameters K2 erfolgt. Während in Figur 4 der zweite Parameter K2 zu Beginn des Antriebswegs x des Hydraulikkolbens HK zu klein voreingestellt ist, ist dieser in Figur 5 zunächst zu groß voreingestellt. Mit fortschreitender Adaption des zweiten Parameters K2 bei größer werdendem Antriebsweg x nähert sich der Verlauf des Istwerts vi dem des Sollwerts vs an.

In einer weiteren Ausführungsform der Erfindung dient das erfindungsgemäße Steuerverfahren insbesondere der nichtlinearen Steuerung einer Kunststoffspritzgießmaschine, wobei die Kunststoffspritzgießmaschine beispielsweise eine Steuerungsschaltung zur Durchführung des erfindungsgemäßen Steuerverfahrens aufweist.

**Patentansprüche**

1. Steuerverfahren für einen Hydraulikantrieb (HA) eines technischen Prozesses (TP), wobei zur Erzeugung einer Stellgröße (y) für den Hydraulikantrieb (HA) zumindest berücksichtigt werden,

   a) ein Sollwert (vs) für die Antriebsgeschwindigkeit (vi) des Hydraulikantriebs (HA),
   b) ein erster konstanter Parameter (K1), welcher das Übertragungsverhalten (KV, AO) des Hydraulikantriebs (HA) nachbildet,
   c) ein zweiter konstanter Parameter (K2), welcher den dem Hydraulikantrieb (HA) entgegensetzten inneren Widerstand (KD, AK, AO) des technischen Prozesses (TP) nachbildet, und
   d) eine erste Konstante (pp), welche den Druck nachbildet, welcher von einer Hydraulikpumpe (HP) im Hydraulikantrieb (HA) erzeugt wird (Gl. 1).

2. Steuerverfahren nach Anspruch 1, wobei der erste Parameter (K1) eine zweite Konstante (AO) aufweist, welche diejenige Querschnittsfläche der Hydraulikkolben (HK) des Hydraulikantriebs (HA) nachbildet, welche von der Hydraulikflüssigkeit (HF) beaufschlagt wird.

3. Steuerverfahren nach einem der vorangegangenen Ansprüche, wobei der erste Parameter (K1) eine dritte Konstante (KV) aufweist, welche das Übertragungsverhalten (KV, AO) eines Hydraulikventils (HV) im Hydraulikantrieb (HA) nachbildet.

4. Steuerverfahren nach den Ansprüchen 2 und 3, wobei der erste Parameter (K1) annähernd proportional ist zum Quotienten (Gl.2) aus der zweiten Konstante (AO) und der dritten Konstante (KV).

5. Steuerverfahren nach einem der vorangegangenen Ansprüche, wobei der zweite Parameter (K2) aus dem Produkt (Gl.3) gebildet wird zwischen

   a) einer vierten Konstante (KD), welche den inneren Widerstand des technischen Prozesses (TP) nachbildet, und
   b) einem Proportionalitätsfaktor (P).

6. Steuerverfahren nach Anspruch 5, wobei der Proportionalitätsfaktor (P) eine zweite Konstante (AO) aufweist, welche diejenige Querschnittsfläche der Hydraulikkolben (HK) des Hydraulikantriebs (HA) nachbildet, welche von der Hydraulikflüssigkeit (HF) beaufschlagt wird.

7. Steuerverfahren nach einem der Ansprüche 5 oder 6, wobei der Proportionalitätsfaktor (P) eine fünfte Konstante (AK) aufweist, welche diejenige Querschnittsfläche von Hydraulikkolben (HK) des Hydraulikantriebs (HA) nachbildet, welche auf den zum technischen Prozeß (TP) führenden Teil des Hydraulikantriebs (HA) einwirkt.

8. Steuerverfahren nach einem der Ansprüche 5 bis 7, wobei der Proportionalitätsfaktor (P) annähernd proportional ist zum Quotienten (Gl.4) aus dem Quadrat der fünften Konstante (AK) und der zweiten Konstante (AO).

9. Steuerverfahren nach einem der Ansprüche 1 bis 4, wobei der zweite Parameter (K2) den Quotienten (Gl.5) aus dem auf die Hydraulikkolben (HK) wirkenden Istwert des Drucks (pi) der Hydraulikflüssigkeit (HF) und dem Istwert der Antriebsgeschwindigkeit (vi) des Hydraulikkolbens (HK) insbesondere in einem eingeschwungenen Zustand des Hydraulikantriebs (HA) berücksichtigt.

10. Steuerverfahren nach Anspruch 9, wobei der zweite Parameter (K2) bezüglich Veränderungen des technischen Prozesses (TP) zyklisch aktualisiert wird (Gl.14).

11. Kunststoffspritzgießmaschine mit mindestens einem Hydraulikantrieb (HA) für einen technischen Prozess (TP) wobei zur Erzeugung einer Stellgröße (y) für den Hydraulikantrieb zumindest berücksichtigt ist,

    a) ein Sollwert (vs) für die Antriebsgeschwindigkeit (vi) des Hydraulikantriebs (HA),
    b) ein erster konstanter Parameter (K1), durch welchen das Übergangsverhalten (KV,AO) des Hydraulikantriebs (HA) nachbildbar ist,
    c) ein zweiter konstanter Parameter (K2), durch welchen der dem Hydraulikantrieb (HA) entgegengesetzten inneren Widerstand (KD,AK,AO) des technischen Prozesses (TP) nachbildbar ist, und
    d) eine erste Konstante (pp), durch welche der Druck nachbildbar ist, welcher von einer Hydraulikpumpe (HP) im Hydraulikantrieb (HA) erzeugbar ist (Gl. 1).

12. Kunststoffspritzgießmaschine nach Anspruch 11, **dadurch gekennzeichnet, dass** der erste Parameter (K1) eine zweite Konstante (AO) aufweist, durch welche diejenige Querschnittsfläche der Hydraulikkolben (HK) des Hydraulikantriebs (HA) nachbildbar ist, welche von der Hydraulikflüssigkeit (HF) beaufschlagt ist.

13. Kunststoffspritzgießmaschine nach Anspruch 11 oder 12, **dadurch gekennzeichnet, dass** der erste Parameter (K1) eine dritte Konstante (KV) aufweist, durch welche das Übertragungsverhalten (KV, AO) eines Hydraulikventils (HV) im Hydraulikantrieb (HA) nachbildbar ist.

14. Kunststoffspritzgießmaschine nach einem der Ansprüche 12 oder 13, **dadurch gekennzeichnet, dass** der erste Parameter (K1) annähernd proportional ist zum Quotienten (Gl. 2) aus der zweiten Konstante (AO) und der dritten Konstante (KV).

15. Kunststoffspritzgießmaschine nach einem der Ansprüche 11 bis 14, **dadurch gekennzeichnet, dass** der zweite Parameter (K2) aus dem Produkt (Gl. 3) gebildet ist zwischen

    a) einer vierten Konstante (KD), welche den inneren Widerstand des technischen Prozesses (TP) nachbildet, und
    b) einem Proportionalitätsfaktor (P).

**16.** Kunststoffspritzgießmaschine nach Anspruch 15, **dadurch gekennzeichnet, dass** der Proportionalitätsfaktor (P) eine zweite Konstante (AO) aufweist, welche diejenige Querschnittsfläche der Hydraulikkolben (HK) des Hydraulikantriebs (HA) nachbildet, welche von der Hydraulikflüssigkeit (HF) beaufschlagt ist.

**17.** Kunststoffspritzgießmaschine nach Anspruch 15 oder 16, **dadurch gekennzeichnet, dass** der Proportionalitätsfaktor (P) eine fünfte Konstante (AK) aufweist, welche diejenige Querschnittsfläche von Hydraulikkolben (HK) des Hydraulikantriebs (HA) nachbildet, welche auf den zum technischen Prozess (TP) führenden Teil des Hydraulikantriebs (HA) einwirkt.

**18.** Kunststoffspritzgießmaschine nach einem der Ansprüche 15 bis 17, **dadurch gekennzeichnet, dass** der Proportionalitätsfaktor (P) annähernd proportional ist zum Quotienten (Gl. 4) aus dem Quadrat der fünften Konstante (AK) und der zweiten Konstante (AO).

**19.** Kunststoffspritzgießmaschine nach einem der Ansprüche 11 bis 14, **dadurch gekennzeichnet, dass** im zweiten Parameter (K2) der Quotient (Gl. 5) aus dem auf die Hydraulikkolben (HK) wirkenden Istwert des Drucks (pi) der Hydraulikflüssigkeit (HF) und dem Istwert der Antriebsgeschwindigkeit (vi) des Hydraulikkolbens (HK) insbesondere in einem eingeschwungenem Zustand des Hydraulikantriebs (HA) berücksichtigt ist.

**20.** Kunststoffspritzgießmaschine nach Anspruch 19, **dadurch gekennzeichnet, dass** der zweite Parameter (K2) bezüglich Veränderungen des technischen Prozesses (TP) zyklisch aktualisiert ist.

**21.** Verwendung des Steuerverfahrens nach einem der vorangegangenen Ansprüche 1 bis 10 zur Steuerung einer Kunststoffspritzgießmaschine.

**Claims**

**1.** Control method for a hydraulic drive (HA) of a technical process (TP), at least the following being taken into account for generating a manipulated variable (y) for the hydraulic drive (HA):

a) a desired value (vs) for the speed (vi) of the hydraulic drive (HA),

b) a first constant parameter (K1) which simulates the response characteristics (KV, AO) of the hydraulic drive (HA),

c) a second constant parameter (K2) which simulates the internal resistance (KD, AK, AO), opposed to the hydraulic drive (HA), of the technical process (TP), and

d) a first constant (pp) which simulates the pressure which is produced by a hydraulic pump (HP) in the hydraulic drive (HA) (equation 1).

**2.** Control method according to Claim 1, the first parameter (K1) having a second constant (AO) which simulates that cross-sectional surface of the hydraulic pistons (HK) of the hydraulic drive (HA) to which the hydraulic liquid (HF) is applied.

**3.** Control method according to one of the preceding claims, the first parameter (K1) having a third constant (KV) which simulates the response characteristic (KV, AO) of a hydraulic valve (HV) in the hydraulic drive (HA).

**4.** Control method according to one of Claims 2 and 3, the first parameter (K1) being approximately proportional to the quotient (equation 2) of the second constant (AO) and the third constant (KV).

**5.** Control method according to one of the preceding claims, the second parameter (K2) being formed from the product (equation 3) of

a) a fourth constant (KD) which simulates the internal resistance of the technical process (TP), and

b) a proportionality factor (P).

6. Control method according to Claim 5, the proportionality factor (P) having a second constant (AO) which simulates that cross-sectional surface of the hydraulic pistons (HK) of the hydraulic drive (HA) to which the hydraulic liquid (HF) is applied.

7. Control method according to one of Claims 5 or 6, the proportionality factor (P) having a fifth constant (AK) which simulates that cross-sectional surface of hydraulic pitons (HK) of the hydraulic drive (HA) which acts on the part of the hydraulic drive (HA) leading to the technical process (TP).

8. Control method according to one of Claims 5 to 7, the proportionality factor (P) being approximately proportional to the quotient (equation 4) of the square of the fifth constant (AK) and the second constant (AO).

9. Control method according to one of Claims 1 to 4, the second parameter (K2) taking account of the quotient (equation 5) of the actual value, acting on the hydraulic pistons (HK), of the pressure (pi) of the hydraulic liquid (HF) and the actual value of the drive speed (vi) of the hydraulic piston (HK), particularly in a steady state of the hydraulic drive (HA).

10. Control method according to Claim 9, the second parameter (K2) being cyclically updated with reference to changes in the technical process (TP) (equation 14).

11. Plastics injection moulding machine having at least one hydraulic drive (HA) for a technical process (TP), at least the following being taken into account for generating a manipulated variable (y) for the hydraulic drive:

    a) a desired value (vs) for the speed (vi) of the hydraulic drive (HA),

    b) a first constant parameter (K1) by means of which the response characteristics (KV, AO) of the hydraulic drive (HA) can be simulated,

    c) a second constant parameter (K2) by means of which the internal resistance (KD, AK, AO), opposed to the hydraulic drive (HA), of the technical process (TP) can be simulated, and

    d) a first constant (pp) by means of which the pressure which can be produced by a hydraulic pump (HP) in the hydraulic drive (HA) (equation 1) can be simulated.

12. Plastics injection moulding machine according to Claim 11, **characterised in that** the first parameter (K1) has a second constant (AO) by means of which that cross-sectional surface of the hydraulic pistons (HK) of the hydraulic drive (HA) to which the hydraulic liquid (HF) is applied can be simulated.

13. Plastics injection moulding machine according to Claims 11 or 12, **characterised in that** the first parameter (K1) has a third constant (KV) by means of which the response characteristic (KV, AO) of a hydraulic valve (HV) in the hydraulic drive (HA) can be simulated.

14. Plastics injection moulding machine according to one of Claims 12 or 13, **characterised in that** the first parameter (K1) is approximately proportional to the quotient (equation 2) of the second constant (AO) and the third constant (KV).

15. Plastics injection moulding machine according to one of Claims 11 to 14, **characterised in that** the second parameter (K2) is formed from the product (equation 3) of

    a) a fourth constant (KD) which simulates the internal resistance of the technical process (TP), and

    b) a proportionality factor (P).

16. Plastics injection moulding machine according to Claim 15, **characterised in that** the proportionality factor (P) has a second constant (AO) which simulates that cross-sectional surface of the hydraulic pistons (HK) of the hydraulic drive (HA) to which the hydraulic liquid (HF) is applied.

17. Plastics injection moulding machine according to Claims 15 or 16, **characterised in that** the proportionality factor (P) has a fifth constant (AK), which simulates that cross-sectional surface of hydraulic pistons (HK) of the hydraulic drive (HA) which acts on the part of the hydraulic drive (HA) leading to the technical process (TP).

18. Plastics injection moulding machine according to one of Claims 15 to 17, **characterised in that** the proportionality factor (P) is approximately proportional to the quotient (equation 4) of the square of the fifth constant (AK) and the second constant (AO).

19. Plastics injection moulding machine according to one of Claims 11 to 14, **characterised in that** the second parameter (K2) takes account of the quotient (equation 5) of the actual value, acting on the hydraulic pistons (HK), of the pressure (pi) of the hydraulic liquid (HF) and the actual value of the drive speed (vi) of the hydraulic piston (HK), particularly in a steady state of the hydraulic drive (HA).

20. Plastics injection moulding machine according to Claim 19, **characterised in that** the second parameter (K2) is cyclically updated with reference to changes in the technical process (TP).

21. The use of the control method according to one of the preceding claims 1 to 10 for controlling a plastics injection moulding machine.

**Revendications**

1. Procédé de commande pour un dispositif (HA) d'entraînement hydraulique d'une opération (TP) technique, au moins

   a) une grandeur (vs) de consigne pour la vitesse (vi) d'entraînement du dispositif (HA) d'entraînement hydraulique,
   b) un premier paramètre (K1) constant qui reproduit le comportement (KV, AO) au transfert du dispositif (HA) d'entraînement hydraulique,
   c) un deuxième paramètre (K2) constant qui reproduit la résistance (KD, AK, AO) intérieure de l'opération (TP) technique, opposée au dispositif (HA) d'entraînement hydraulique et
   d) une première constante (pp) qui reproduit la pression qui est produite par une pompe (HP) hydraulique dans le dispositif (HA) d'entraînement hydraulique (équation 1)

   étant pris en compte pour la production dune grandeur (y) réglante pour le dispositif (HA) d'entraînement hydraulique.

2. Procédé de commande suivant la revendication 1, le premier paramètre (K1) comportant une deuxième constante (AO) qui reproduit la surface de section transversale du piston (HK) hydraulique du dispositif (HA) d'entraînement hydraulique qui est alimenté en le liquide (HF) hydraulique.

3. Procédé de commande suivant l'une des revendications précédentes, le premier paramètre (K1) comportant une troisième constante (KV) qui reproduit le comportement (KV, AO) au transfert dune valve (HV) hydraulique dans le dispositif (HA) d'entraînement hydraulique.

4. Procédé de commande suivant les revendications 2 et 3, le premier paramètre (K1) étant à peu près proportionnel au quotient (équation 2) de la deuxième constante (AO) sur la troisième constante (KV).

5. Procédé de commande suivant l'une des revendications précédentes, le deuxième paramètre (K2) étant formé du produit (équation 3) de

   a) d'une première constante (KD) qui reproduit la résistance intérieure de l'opération (TP) technique et
   b) d'un facteur (P) de proportionnalité.

6. Procédé au commande suivant la revendication 5, le facteur (P) de proportionnalité comportant une deuxième constante (AO) qui reproduit la surface de section transversale du piston (HK) hydraulique du dispositif (HA) d'entraînement hydraulique qui est alimenté en le liquide (HF) hydraulique.

7. Procédé de commande suivant l'une des revendications 5 ou 6, le facteur (P) de proportionnalité comportant une cinquième constante (AK) qui reproduit la surface de section transversale de piston (HK) hydraulique du dispositif (HA) d'entraînement hydraulique qui agit sur la partie du dispositif (HA) d'entraînement hydraulique amenant à l'opération (TP) technique.

**8.** Procédé de commande suivant l'une des revendications 5 à 7, le facteur (P) de proportionnalité étant à peu près proportionnel au quotient (équation 4) du carré de la cinquième constante (AK) sur la deuxième constante (AO).

**9.** Procédé de commande suivant l'une des revendications 1 à 4, le deuxième paramètre (K2) prenant en compte le quotient (équation 5) de la valeur réelle de la pression (pi) du liquide (HF) hydraulique agissant sur le piston (HK) hydraulique sur la valeur réelle de la vitesse (vi) d'entraînement du piston (HK) hydraulique, notamment en un régime permanent du dispositif (HA) d'entraînement hydraulique.

**10.** Procédé de commande suivant la revendication 9, le deuxième paramètre (K2) étant mis à jour (équation 14) de manière cyclique par rapport à des modifications de l'opération (TP) technique.

**11.** Machine de moulage par injection de matière plastique comportant au moins un dispositif (HA) d'entraînement hydraulique pour une opération (TP) technique, au moins

a) une valeur (vs) de consigne pour la vitesse (vi) d'entraînement du dispositif (HA) d'entraînement hydraulique,
b) un premier paramètre (K1) constant par lequel le comportement (KV, AO) au transfert du dispositif (HA) d'entraînement hydraulique peut être reproduit ,
c) un deuxième paramètre (K2) constant par lequel la résistance (KD, AK, AO) intérieure de l'opération (TP) technique, opposée au dispositif (HA) d'entraînement hydraulique peut être reproduite,
d) une première constante (pp) par laquelle la pression qui peut être produite par une pompe (HP) hydraulique dans le dispositif (HA) d'entraînement hydraulique (équation 1) peut être reproduite

étant pris en compte pour produire une grandeur (y) réglante pour le dispositif d'entraînement hydraulique.

**12.** Machine de moulage par injection de matière plastique suivant la revendication 11, **caractérisée en ce que** le premier paramètre (K1) comporte une deuxième constante (AO) par laquelle la surface de section transversale du piston (HK) hydraulique du dispositif (HA) d'entraînement hydraulique qui est alimentée en le liquide (HF) hydraulique peut être reproduite.

**13.** Machine de moulage par injection de matière plastique suivant la revendication 11 ou 12, **caractérisée en ce que** le premier paramètre (K1) comporte une troisième constante (KV) par laquelle le comportement (KV, AO) au transfert d'une valve (HV) hydraulique dans le dispositif (HA) d'entraînement hydraulique peut être reproduit.

**14.** Machine de moulage par injection de matière plastique suivant l'une des revendications 12 ou 13, **caractérisée en ce que** le premier paramètre (K1) est à peu près proportionnel au quotient (équation 2) de la deuxième constante (AO) sur la troisième constante (KV).

**15.** Machine de moulage par injection de matière plastique suivant l'une des revendications 11 à 14, **caractérisée en ce que** le deuxième paramètre (K2) est formé du produit (équation 3)

a) d'une quatrième constante (KD) qui reproduit la résistance intérieure de l'opération (TP) technique, et
b) d'un facteur (P) de proportionnalité.

**16.** Machine de moulage par injection de matière plastique suivant la revendication 15, **caractérisée en ce que** le facteur (P) de proportionnalité comporte une deuxième constante (AO) qui reproduit la surface de section transversale du piston (HK) hydraulique du dispositif (HA) d'entraînement hydraulique qui est alimenté en le liquide (HF) hydraulique.

**17.** Machine de moulage par injection de matière plastique suivant la revendication 15 ou 16, **caractérisée en ce que** le facteur (P) de proportionnalité comporte une cinquième constante (AK) qui reproduit la surface de section transversale de piston (HK) hydraulique du dispositif (HA) d'entraînement hydraulique qui agit sur la partie du dispositif (HA) d'entraînement hydraulique qui amène à l'opération (TP) technique.

**18.** Machine de moulage par injection de matière plastique suivant Tune des revendications 15 à 17, **caractérisée en ce que** le facteur (P) de proportionnalité est à peu près proportionnel au quotient (équation 4) du carré de la cinquième constante (AK) sur la deuxième constante (AO).

19. Machine de moulage par injection de matière plastique suivant Tune des revendications 11 à 14, **caractérisée en ce qu'**il est pris en compte dans le deuxième paramètre (K2) le quotient (équation 5) de la valeur réelle de la pression (pi) du liquide (HF) hydraulique agissant sur les pistons (HK) hydrauliques sur la valeur réelle de la vitesse (vi) d'entraînement du piston (HK) hydraulique, notamment en un état permanent du dispositif (HA) d'entraînement hydraulique.

20. Machine de moulage par injection de matière plastique suivant la revendication 19, **caractérisée en ce que** le deuxième paramètre (K2) est mis à jour de manière cyclique par rapport à des modifications de l'opération (TP) technique.

21. Utilisation du procédé de commande suivant l'une des revendications 1 à 10 précédentes pour commander une machine de moulage par injection de matière plastique.

FIG 1

FIG 2

FIG 3

**FIG 4**

**FIG 5**